# FASCICULE DE BREVET EUROPEEN

(11) **EP 0 402 204 B1**
(45) Date de publication et mention de la délivrance du brevet: **29.09.1993**
(21) Numéro de dépôt: 90401453.7
(22) Date de dépôt: 31.05.1990
(51) Int. Cl.: C08F 20/10

(54) **Procédé et système d'amorçage de polymérisation anionique de (méth)acrylates**
Verfahren und anionischer Polymerisationskatalysator für (Méth)acrylate
Process and antonic polymerisation catalyst for (meth)acrylates

(30) Priorité: 02.06.1989 FR 8907327
(43) Date de publication de la demande: 12.12.1990
(73) Titulaire: ELF ATOCHEM S.A., 92800 Puteaux (FR)
(72) Inventeur: Teyssie, Philippe, B-4121 Neuville en Condroz (BE); Fayt, Roger, B-4121 Neupre (BE); Varshney, Sunil K., B-4030 Liège (BE)
(74) Mandataire: Chaillot, Geneviève

(56) Documents cités:
- EP-A- 0 185 641
- DE-B- 1 094 986

## Description

La présente invention est relative à un procédé de polymérisation de monomères acryliques et éventuellement de co-monomères non acryliques à l'aide d'agents initiateurs ou amorceurs de polymérisation de formule :

R - M (I)

dans laquelle M désigne un métal choisi parmi les métaux alcalins et alcalino-terreux et R désigne un radical alkyle à chaîne droite ou ramifiée contenant 2 à 6 atomes de carbone ou un radical aryle.

On connaît des procédés de polymérisation de monomères acryliques ou méthacryliques, tels que des acrylates et méthacrylates d'alkyle, ainsi que des procédés de copolymérisation de tels monomères acryliques ou méthacryliques ainsi que de co-monomères non acryliques, en présence de divers agents initiateurs ou amorceurs de polymérisation, notamment ceux de formule (I) donnée plus haut, comme le sec.-butyl-lithium et d'autres agents initiateurs, comme les alcoolates tertiaires de lithium.

Il est également connu par la demande de brevet EP-A-185 641 d'utiliser dans les réactions de polymérisation de monomères acryliques et méthacryliques, ainsi que dans les réactions de copolymérisation de tels monomères et de co-monomères non-acryliques, des co-catalyseurs ou additifs constitués de sels de métal alcalin ou alcalino-terreux, de préférence des halogènes d'un tel métal. Ces co-catalyseurs permettent d'éviter des réactions secondaires et permettent d'obtenir des polymères d'indice de polydispersité (rapport M_{w}/Mₙ) très bas.

Toutefois, deux problèmes restent à résoudre dans ces procédés : d'une part, celui de la cinétique réactionnelle et, d'autre part, celui du contrôle de la masse moléculaire des polymères. En effet, l'utilisation d'un sel de métal alcalin ou alcalino-terreux diminue la réactivité de l'agent initiateur, ce qui peut être préjudiciable à la productivité du procédé par le biais d'un allongement de la durée nécessaire pour une conversion totale du monomère. Par ailleurs, dans le cas où le monomère acrylique est le méthacrylate de méthyle, ces procédés connus permettent facilement d'obtenir des polymères de masse moléculaire élevée. Par contre, ils semblent mal adaptés à l'obtention de polymères ou copolymères comportant une séquence polyméthacrylate de méthyle dont la masse moléculaire moyenne en nombre est par exemple inférieure à 35 000.

La présente invention est basée sur la découverte surprenante que, pour résoudre au moins l'un des problèmes évoqués ci-dessus, il est avantageux d'effectuer la polymérisation de monomères acryliques ou méthacryliques, le cas échéant avec des co-monomères non-acryliques, à l'aide d'un catalyseur de formule (I) donnée plus haut, en utilisant un co-catalyseur ou additif constitué d'un dérivé organique d'un métal alcalin, à la condition que ce dérivé organique ne soit ni un alcoolate ni un ester d'acide carboxylique substitué en position α par ledit métal.

Ainsi, un premier objet de la présente invention consiste en un système d'amorçage de la polymérisation anionique de (méth)acrylates comprenant au moins un amorceur de formule R-M (I) dans laquelle M désigne un métal choisi parmi les métaux alcalins et alcalino-terreux et R désigne un radical alkyle à chaîne droite ou ramifiée contenant de 2 à 6 atomes de carbone ou un radical aryle ou un radical arylalkyle, caractérisé en ce qu'il comprend en outre au moins un dérivé organique d'un métal alcalin, à la condition que ce dérivé organique ne soit ni un alcoolate ni un ester d'acide carboxylique substitué en position α par ledit métal.

Parmi les dérivés organiques de métal alcalin utilisables dans le cadre de la présente invention, on peut citer notamment les dérivés dans lesquels le métal alcalin est associé à un groupe choisi parmi :
(A) les groupes de formule : 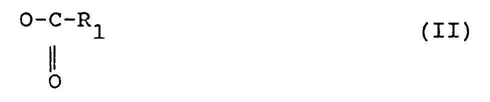 dans laquelle R₁ est un radical alkyle linéaire ou ramifié possédant de 1 à 20 atomes de carbone, ou bien un radical cycloalkyle possédant de 3 à 20 atomes de carbone, ou encore un radical aryle possédant de 6 à 14 atomes de carbone,
(B) les groupes de formule : 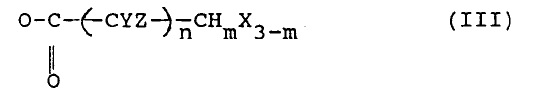 dans laquelle :
   - Y et Z, identiques ou différents l'un de l'autre, sont choisis parmi l'atome d'hydrogène et les atomes d'halogène ;
   - n est un nombre entier allant de 0 à 4,
   - X est un atome d'halogène, et
   - m est un nombre entier allant de 0 à 2,
(C) les groupes de formule :

   O-SO₂-CT₃ (IV)

   dans laquelle T est choisi parmi l'atome d'hydrogène et les atomes d'halogène, et
(D) les groupes de formule :

   B(R₂)₄ (V)

   dans laquelle R₂ est choisi parmi l'atome d'hydrogène et les radicaux alkyle et aryle.

Des exemples de groupes de formule (II) sont les groupes acétate, propionate et benzoate. Des exemples de groupes de formule (III) sont les groupes α -bromoacétate et trifluoroacétate. Des exemples de groupes de formule (IV) sont les groupes trifluorométhane sulfonique et méthanesulfonique. Des exemples de groupes (V) sont les groupes borohydrure et tétraphénylborure.

Le rapport molaire du dérivé organique de métal alcalin à l'amorceur dans le sytème d'amorçage selon l'invention peut varier dans des limites très larges. Toutefois, l'obtention de réultats spécifiques dans la polymérisation des (méth)acrylates est généralement subordonnée à la sélection d'un rapport molaire compris entre 0,3 environ et 15 environ, quoique des quantités supérieures de dérivé organique ne puissent être nuisibles. En vue de la résolution des problèmes auxquels s'adresse la présente invention, la quantité de dérivé organique doit être suffisante pour permettre la formation d'un complexe avec le centre actif de polymérisation et, de la sorte, pour stabiliser ce dernier.

Un second objet de la présente invention consiste en un procédé de polymérisation de (méth)acrylates et éventuellement de co-monomères vinyliques à l'aide d'au moins un amorceur de formule R - M (I) dans laquelle M désigne un métal choisi parmi les métaux alcalins et alcalino-terreux et R désigne un radical alkyle à chaîne droite ou ramifiée contenant 2 à 6 atomes de carbone ou un radical aryle ou un radical arylalkyle, caractérisé en ce que la polymérisation est effectuée en présence en outre d'au moins un dérivé organique d'un métal alcalin, à la condition que ce dérivé organique ne soit ni un alcoolate ni un ester d'acide carboxylique substitué en position α par ledit métal.

L'amorceur de formule (I) et le dérivé organique de métal alcalin forment ensemble un système d'amorçage de polymérisation conforme au premier objet de la présente invention et pour lequel on se reportera à la description détaillée ci-dessus.

Des amorceurs de formule R-M (I) qui peuvent être utilisés dans le procédé selon l'invention sont notamment le diphénylméthylsodium, le diphénylméthylpotassium et le 1,4-disodio-1,1,4,4-tétraphénylbutane, 1′α-méthylstyryllithium, le diphénylméthyllithium, le sec-butyllithium, le n-butyllithium, le naphtalène sodium, le 1,1-diphényl-3-méthylpentyllithium et le 1,1-diphényl hexyllithium.

Le procédé selon l'invention est particulièrement avantageux pour l'obtention de polyacrylates tertiaires par polymérisation directe, ainsi que pour l'obtention de copolymères à blocs comportant une séquence de polyacrylate tertiaire associée à une séquence de polyméthacrylate.

Les acrylates tertiaires pouvant être soumis au procédé de polymérisation selon l'invention sont notamment les acrylates d'alkyle tertiaire dont le groupe alkyle contient de 4 à 10 atomes de carbone, plus particulièrement l'acrylate de tertiobutyle, l'acrylate de 2-éthylhexyle et l'acrylate de 3,5,5-triméthylhexyle.

Le procédé selon l'invention est également avantageux pour la polymérisation du méthacrylate de méthyle, du méthacrylate d'éthyle, du méthacrylate de tertiobutyle et de leurs homologues, ainsi que pour l'obtention de copolymères à blocs comportant une séquence de polyméthacrylate associée à une séquence polymère dérivée d'un co-monomère non-acrylique.

Comme comonomère non-acrylique, on utilise avantageusement, dans le procédé suivant l'invention, un comonomère vinylique tel que par exemple le butadiène, l'isoprène, le styrène, le vinylnaphtalène, la vinyl-2-pyridine, la vinyl-4-pyridine, l'alphaméthylstyrène et le tertiobutylstyrène.

Dans le procédé suivant l'invention, la proportion d'alcoolate alcalin utilisé peut varier fortement par rapport à l'amorceur. Comme on le comprend aisément, cette proportion dépend de l'amorceur choisi, du (méth)acrylate polymérisé et du comonomère non-acrylique, et peut être déterminée facilement en fonction de l'objectif visé.

Dans le procédé suivant l'invention, la polymérisation ou copolymérisation s'effectue de préférence en l'absence d'humidité et d'oxygène, et en présence d'au moins un solvant choisi de préférence parmi les solvants aromatiques, tels que benzène et toluène, ou bien le tétrahydrofuranne, le diglyme, le tétraglyme, l'orthoterphényle, le biphényle, la décaline ou encore la tétraline.

La température de polymérisation peut varier entre -80° et 0°C environ.

Le procédé selon l'invention permet de préparer avec une bonne cinétique toute une gamme de polymères comprenant au moins une séquence d'acrylate d'alkyle tertiaire, le groupe alkyle possédant de 4 à 10 atomes de carbone, ayant une masse moléculaire moyenne en nombre généralement comprise entre 1000 et 20 000 environ et un indice de polydispersité des masses moléculaires (défini comme le rapport de la masse moléculaire moyenne en poids à la masse moléculaire moyenne en nombre), et déterminé par chromatographie d'exclusion généralement compris entre 1,2 et 4 environ.

Le procédé selon l'invention permet également de préparer toute une gamme de polyméthacrylates, tels que définis précédemment, ayant une masse moléculaire moyenne en nombre généralement comprise entre 7000 et 35 000 et un indice de polydispersité des masses moléculaires, défini et déterminé comme précédemment, généralement compris entre 1,05 et 1,9 environ.

Les exemples suivants sont donnés à titre illustratif et non-limitatif de la présente invention.

Dans tous ces exemples, la chromatographie d'exclusion a été effectuée en utilisant un appareil WATERS GPC 501 équipé de deux colonnes linéaires, avec le tétrahydrofuranne comme éluant à un débit de 1 ml/min. Les masses moléculaires moyennes en nombre ont été déterminées au moyen d'un osmomètre à membrane HP 502.

### EXEMPLE 1

Dans un ballon préalablement séché et sous atmosphère d'azote, on introduit 0,7 x 10⁻³ mole de tétraphénylborure de sodium préalablement purifié puis conservé sous atmosphère inerte en l'absence de lumière. On y ajoute 100 ml de tétrahydrofuranne préséché et, sous agitation, au goutte à goutte, 1,23.10⁻³ mole de sec-butyllithium en solution dans le toluène. On porte le mélange à la température de -78°C au moyen d'un mélange d'acétone et de carboglace puis on ajoute, toujours à -78°C une solution comprenant 0,081 mole d'acrylate de 2-éthylhexyle dans le toluène, ledit acrylate ayant été préalablement agité sur hydrure de calcium pendant 48 heures, distillé puis traité sur fluorényllithium jusqu'à apparition d'une couleur jaune persistante et enfin distillé sur triéthylaluminium immédiatement avant la polymérisation.

On arrête la réaction après 4 heures par addition de 5 ml de méthanol, après quoi on chasse le solvant. On obtient le polyacrylate de 2-éthylhexyle avec un rendement de 73%. L'analyse du polymère par chromatographie d'exclusion indique une masse moléculaire moyenne en nombre égale à 1650.

### EXEMPLE 2

On reproduit l'expérience de l'exemple 1 en remplaçant le sec-butyllithium par 0,9.10⁻³ mole de naphtalène sodium et en utilisant 0,67.10⁻³ mole de tétraphénylborure de sodium et 17 g d'acrylate de 2-éthylhexyle. Après 4 heures de réaction, on obtient le polyacrylate de 2-éthylhexyle avec un rendement de 100%. L'analyse du polymère par chromatographie d'exclusion montre les caractéristiques suivantes :

Mₙ = 10 200 M_{w}/Mₙ = 3,1

### EXEMPLE 3

On reproduit la procédure expérimentale de l'exemple 1 tout en modifiant les ingrédients comme suit :
- α-méthylstyryllithium: = 10⁻³ mole
- tétraphénylborure de sodium: = 2.10⁻³ mole
- monomère: = 10 g d'acrylate de tertiobutyle.

Après 15 minutes de réaction, on obtient avec un rendement de 93% un polyacrylate de tertiobutyle possédant les caractéristiques suivantes :

Mₙ = 17 000 M_{w}/Mₙ = 3,9

### EXEMPLE 4

On reproduit la procédure expérimentale de l'exemple 1 tout en modifiant les ingrédients comme suit :
- diphényl méthyllithium: = 0,4.10⁻³ mole
- tétraphénylborure de lithium: = 0,4.10⁻³ mole
- acrylate de 3,5,5-triméthylhexyle: = 10 g.

Après 4 heures de réaction, on obtient un polymère possédant les caractéristiques suivantes :

Mₙ = 1050 M_{w}/Mₙ = 1,3

### EXEMPLE 5

On reproduit la procédure expérimentale de l'exemple 1 tout en modifiant les ingrédients comme suit :
- α-méthylstyryllithium: = 0,46 x 10⁻³ mole
- trifluorosulfonate de lithium: = 0,92 x 10⁻³ mole
- méthacrylate de méthyle: = 4,7 g

Après 15 minutes de réaction, on obtient avec un rendement de 100% un polyméthacrylate de méthyle possédant les caractéristiques suivantes :

Mₙ = 33 000 M_{w}/Mₙ = 1,1

### EXEMPLE 6

On reproduit la procédure expérimentale de l'exemple 1 tout en modifiant les ingrédients comme suit :
- α-méthylstyryllithium: = 0,46 x 10⁻³ mole
- trifluoroacétate de lithium: = 0,92 x 10⁻³ mole
- méthacrylate de méthyle: = 1,7 g

Après 15 minutes de réaction, on obtient avec un rendement de 91% un polyméthacrylate de méthyle possédant les caractéristiques suivantes :

Mₙ = 7000 M_{w}/Mₙ = 1,3

### EXEMPLE 7

En reproduisant l'expérience de l'exemple 5, à l'exception de la température de polymérisation portée à -40°C, on obtient avec un rendement de 100% un polyméthacrylate de méthyle possédant les caractéristiques suivantes :

Mₙ = 16 500 M_{w}/Mₙ = 1,3

### EXEMPLE 8

En reproduisant l'expérience de l'exemple 6, à l'exception de la température de polymérisation portée à -40°C, on obtient avec un rendement de 81% un polyméthacrylate de méthyle possédant les caractéristiques suivantes :

Mₙ = 10 500 M_{w}/Mₙ = 1,5.

### EXEMPLE 9

On reproduit la procédure expérimentale de l'exemple 1 tout en portant la température de polymérisation à -40°C et en modifiant les ingrédients comme suit :
- α-méthylstyryllithium: = 0,25 x 10⁻³ mole
- acétate de lithium: = 0,50 x 10⁻³ mole
- méthacrylate de méthyle: = 4,5 g

Après 20 minutes de réaction, on obtient avec un rendement de 100% un polyméthacrylate de méthyle possédant les caractéristiques suivantes :

Mₙ = 25 000 M_{w}/Mₙ = 1,3

### EXEMPLE 10

On reproduit la procédure expérimentale de l'exemple 1 tout en portant la température de polymérisation à -20°C et en effectuant la polymérisation dans un mélange comprenant 80% en poids de toluène et 20% en poids de tétrahydrofuranne. Les ingrédients sont les suivants :
- α-méthylstyryllithium =: 0,24 x 10⁻³ mole
- trifluorosulfonate de lithium =: 0,48 x 10⁻³ mole
- acrylate de tertiobutyle =: 4,5 g

Après 20 minutes de réaction on obtient avec un rendement de 100% un polymère possédant les caractéristiques suivantes :

Mₙ = 19 000 M_{w}/Mₙ = 1,5

## Revendications (Revendications pour l'(les) Etat(s) contractant(s) suivant(s): AT, BE, CH, DE, DK, FR, GB, GR, IT, LI, LU, NL, SE)

1. Système d'amorçage de la polymérisation anionique de (méth)acrylates comprenant au moins un amorceur de formule R-M (I) dans laquelle M désigne un métal choisi parmi les métaux alcalins et alcalino-terreux et R désigne un radical alkyle à chaîne droite ou ramifiée contenant de 2 à 6 atomes de carbone ou un radical aryle ou un radical arylalkyle, caractérisé en ce qu'il comprend en outre au moins un dérivé organique d'un métal alcalin, à la condition que ce dérivé organique ne soit ni un alcoolate ni un ester d'acide carboxylique substitué en position α par ledit métal.

2. Système d'amorçage selon la revendication 1, caractérisé en ce que le dérivé organique est un composé dans lequel le métal alcalin est associé à un groupe choisi parmi :
(A) les groupes de formule : 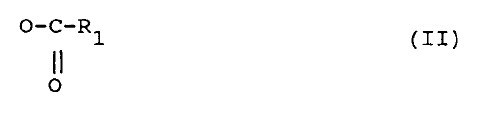 dans laquelle R₁ est un radical alkyle linéaire ou ramifié possédant de 1 à 20 atomes de carbone, ou bien un radical cycloalkyle possédant de 3 à 20 atomes de carbone, ou encore un radical aryle possédant de 6 à 14 atomes de carbone,
(B) les groupes de formule : 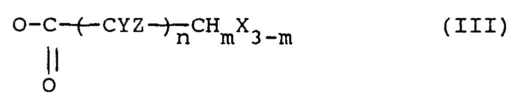 dans laquelle :
- Y et Z, identiques ou différents l'un de l'autre, sont choisis parmi l'atome d'hydrogène et les atomes d'halogène ;
- n est un nombre entier allant de 0 à 4,
- X est un atome d'halogène, et
- m est un nombre entier allant de 0 à 2,
(C) les groupes de formule :
O-SO₂-CT₃ (IV)
dans laquelle T est choisi parmi l'atome d'hydrogène et les atomes d'halogène, et
(D) les groupes de formule :
B(R₂)₄ (V)
dans laquelle R₂ est choisi parmi l'atome d'hydrogène et les radicaux alkyle et aryle.

3. Système d'amorçage selon l'une des revendications 1 et 2, caractérisé en ce que la proportion molaire de dérivé organique de métal alcalin vis-à-vis de l'amorceur est au moins égale à 0,3 et au plus égale à 15.

4. Système d'amorçage selon l'une des revendications 1 à 3, caractérisé en ce que le groupe auquel est associé le métal alcalin est choisi parmi les groupes acétate, propionate, benzoate, α-bromoacétate, trifluoroacétate, méthane sulfonique, trifluorométhane sulfonique, borohydrure et tétraphénylborure.

5. Procédé de polymérisation de (méth)acrylates et éventuellement de comonomères vinyliques à l'aide d'au moins un amorceur de formule R-M (I) dans laquelle M désigne un métal choisi parmi les métaux alcalins et alcalino-terreux et R désigne un radical alkyle à chaîne droite ou ramifiée contenant 2 à 6 atomes de carbone ou un radical aryle ou un radical arylalkyle, caractérisé en ce que la polymérisation est effectuée en présence d'un système d'amorçage conforme à l'une des revendications 1 à 4.

6. Procédé selon la revendication 5, caractérisé en ce qu'on effectue la polymérisation à une température entre -80°C et 0°C.

7. Procédé selon l'une des revendications 5 et 6, caractérisé en ce que la polymérisation est effectuée en présence d'au moins un solvant.

8. Procédé selon la revendication 7, caractérisé en ce que le solvant est le tétrahydrofuranne.

9. Procédé selon la revendication 7, caractérisé en ce que le solvant est le toluène.

10. Procédé selon l'une des revendications 5 à 9, caractérisé en ce que le (méth)acrylate est choisi parmi le méthacrylate de méthyle et les acrylates d'alkyle tertiaire.

## Revendications (Revendications pour l'(les) Etat(s) contractant(s) suivant(s): ES)

1. Procédé de polymérisation anionique de (méth)acrylates et éventuellement de comonomères vinyliques à l'aide d'au moins un amorceur de formule R-M (I) dans laquelle M désigne un métal choisi parmi les métaux alcalins et alcalino-terreux et R désigne un radical alkyle à chaîne droite ou ramifiée contenant 2 à 6 atomes de carbone ou un radical aryle ou un radical arylalkyle, caractérisé en ce qu'on conduit la polymérisation en présence d'un système d'amorçage comprenant, en plus dudit (ou desdits) amorceur(s), au moins un dérivé organique d'un métal alcalin, à la condition que ce dérivé organique ne soit ni un alcoolate ni un ester d'acide carboxylique substitué en position α par ledit métal.

2. Procédé selon la revendication 1, caractérisé en ce que le dérivé organique est un composé dans lequel le métal alcalin est associé à un groupe choisi parmi :
(A) les groupes de formule : 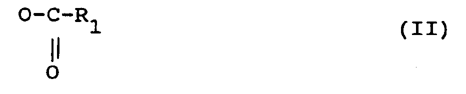 dans laquelle R₁ est un radical alkyle linéaire ou ramifié possédant de 1 à 20 atomes de carbone, ou bien un radical cycloalkyle possédant de 3 à 20 atomes de carbone, ou encore un radical aryle possédant de 6 à 14 atomes de carbone,
(B) les groupes de formule : 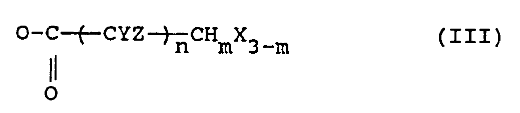 dans laquelle :
- Y et Z, identiques ou différents l'un de l'autre, sont choisis parmi l'atome d'hydrogène et les atomes d'halogène ;
- n est un nombre entier allant de 0 à 4,
- X est un atome d'halogène, et
- m est un nombre entier allant de 0 à 2,
(C) les groupes de formule :
O-SO₂-CT₃ (IV)
dans laquelle T est choisi parmi l'atome d'hydrogène et les atomes d'halogène, et
(D) les groupes de formule :
B(R₂)₄ (V)
dans laquelle R₂ est choisi parmi l'atome d'hydrogène et les radicaux alkyle et aryle.

3. Procédé selon l'une des revendications 1 et 2, caractérisé en ce que la proportion molaire de dérivé organique de métal alcalin vis-à-vis de l'amorceur est au moins égale à 0,3 et au plus égale à 15.

4. Procédé selon l'une des revendications 1 à 3, caractérisé en ce que le groupe auquel est associé le métal alcalin est choisi parmi les groupes acétate, propionate, benzoate, α-bromoacétate, trifluoroacétate, méthane sulfonique, trifluorométhane sulfonique, borohydrure et tétraphénylborure.

5. Procédé selon l'une des revendications 1 à 4, caractérisé en ce qu'on effectue la polymérisation à une température entre -80°C et 0°C.

6. Procédé selon l'une des revendications 1 à 5, caractérisé en ce que la polymérisation est effectuée en présence d'au moins un solvant.

7. Procédé selon la revendication 6, caractérisé en ce que le solvant est le tétrahydrofuranne.

8. Procédé selon la revendication 6, caractérisé en ce que le solvant est le toluène.

9. Procédé selon l'une des revendications 1 à 8, caractérisé en ce que le (méth)acrylate est choisi parmi le méthacrylate de méthyle et les acrylates d'alkyle tertiaire.

## Patentansprüche (Patentansprüche für folgende(n) Vertragsstaat(en): AT, BE, CH, DE, DK, FR, GB, GR, IT, LU, NL, SE)

1. Initiatorsystem für die anionische Polymerisation von (Meth)acrylaten, das mindestens einen Initiator der Formel R-M (I) umfasst, wobei M ein Metall bezeichnet, das unter den Alkali- und Erdalkalimetallen ausgewählt wird, und R einen linearen oder verzweigten, aus 2 bis 6 Kohlenstoffatomen bestehenden Alkylrest oder einen Aryl- oder Arylalkylrest bezeichnet, dadurch gekennzeichnet, daß es zusätzlich mindestens ein organisches Alkalimetallderivat enthält, unter der Bedingung, daß dieses organische Derivat weder ein Alkoholat noch ein in α-Stellung durch besagtes Metall substituierter Carboxylsäureester ist.

2. Initiatorsystem nach Anspruch 1, dadurch gekennzeichnet, daß das organische Derivat eine Verbindung ist, in der das Alkalimetall an eine funtionelle Gruppe gebunden ist, die ausgewählt werden unter :
(A) Gruppen der Formel : 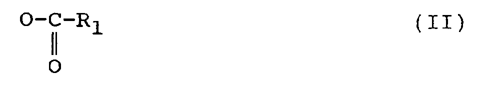 in der R₁ ein linearer oder verzweigter, aus 1 bis 20 Kohlenstoffatomen bestehender Alkylrest, oder ebenso gut ein aus 3 bis 20 Kohlenstoffatomen bestehender Cycloalkylrest oder ein aus 6 bis 14 Kohlenstoffatomen bestehender Arylrest ist,
(B) Gruppen der Formel : 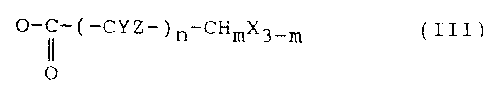 in der :
- Y und Z identisch oder von einander verschieden, unter den Wasserstoff- und Halogenatomen ausgewählt werden,
- n eine ganze Zahl zwischen 0 und 4 ist,
- X ein Halogenatom ist, und
- m eine ganze Zahl zwischen 0 und 2 ist,
(C) Gruppen der Formel :
O-SO₂ -CT₃ (IV)
in der T unter dem Wasserstoff- und den Halogenatomen ausgewählt wird, und
(D) Gruppen der Formel :
B(R₂)₄ (V)
in der R₂ unter dem Wasserstoffatom und den Alkyl- und Arylresten ausgewählt wird.

3. Initiatorsystem nach einer der Ansprüche 1 und 2, dadurch gekennzeichnet, daß das molare Verhältnis des organischen Alkalimetallderivates bezogen auf den Initiator mindestens 0,3 und höchstens 15 beträgt.

4. Initiatorsystem nach einer der Ansprüche 1 bis 3, dadurch gekennzeichnet, daß die Gruppe, an die das Alkalimetall gebunden ist, unter der Acetat-, Propionat-, Benzoat-, α-Bromacetat-, Trifluoracetat-, Methansulfonat-, Trifluormethansulfonat-, Borhydrid- und Tetraphenylboridgruppe ausgewählt wird.

5. Verfahren zur Polymerisation von (Meth)acrylaten und gegebenfalls vinylschen Comonomeren mit Hilfe mindestens eines Initiators der Formel R-M (I), in der M ein unter den Alkali- und Erdalkalimetallen ausgewähltes Metall und R einen aus 2 bis 6 Kohlenstoffatomen bestehenden linearen oder verzweigten Alkylrest, oder einen Aryl- oder Aryl- alkylrest bezeichnet, dadurch gekennzeichnet, daß die Polymerisation in Gegenwart eines den Ansprüchen 1 bis 4 konformen Initiatorsystems durchgeführt wird.

6. Verfahren nach Anspruch 5, dadurch gekennzeichnet, daß die Polymerisation bei einer Temperatur zwischen -80°C und 0°C durchgeführt wird.

7. Verfahren nach einer der Ansprüche 5 und 6, dadurch gekennzeichnet, daß die Polymerisation in Gegenwart mindestens eines Lösemittels durchgeführt wird.

8. Verfahren nach Anspruch 7, dadurch gekennzeichnet, daß das Lösemittel Tetrahydrofuran ist.

9. Verfahren nach Anspruch 7, dadurch gekennzeichnet, daß das Lösemittel Toluol ist.

10. Verfahren nach einer der Ansprüche 5 bis 9, dadurch gekennzeichnet, daß das (Meth)acrylat unter dem Methylmethacrylat und den Tertiäralkylacrylaten ausgewählt wird.

## Patentansprüche (Patentansprüche für folgende(n) Vertragsstaat(en): ES)

1. Initiatorsystem für die anionische Polymerisation von (Meth)acrylaten und gegebenfalls vinylischen Comonomeren mit Hilfe mindestens eines Initiators der Formel R-M (I), in der M ein unter den Alkali- und Erdalkalimetallen ausgewähltes Metall und R einen linearen oder verzweigten, aus 2 bis 6 Kohlenstoffatomen bestehenden Alkylrest oder einen Aryl- oder Arylalkylrest bezeichnet, dadurch gekennzeichnet, daß die Polymerisation in Gegenwart eines Initiatiorsystems durchgeführt wird, das zusätzlich zu dem (den) besagten Initiator(en) mindestens ein organisches Alkalimetallderivat enthält, unter der Bedingung, daß dieses organische Derivat weder ein Alkoholat noch ein in α-Stellung durch besagtes Metall substituierter Carboxylsäureester ist.

2. Initiatorsystem nach Anspruch 1, dadurch gekennzeichnet, daß das organische Derivat eine Verbindung ist, in der das Alkalimetall an eine funtionelle Gruppe gebunden ist, die ausgewählt werden unter :
(A) Gruppen der Formel : 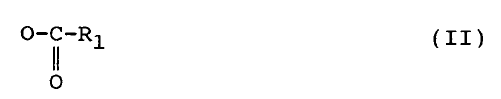 in der R₁ ein linearer oder verzweigter, aus 1 bis 20 Kohlenstoffatomen bestehender Alkylrest, oder ebenso gut ein aus 3 bis 20 Kohlenstoffatomen bestehender Cycloalkylrest oder ein aus 6 bis 14 Kohlenstoffatomen bestehender Arylrest ist,
(B) Gruppen der Formel : 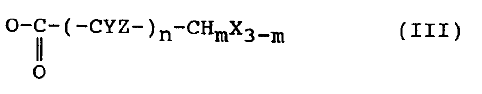 in der :
- Y und Z identisch oder von einander verschieden, unter den Wasserstoff- und Halogenatomen ausgewählt werden,
- n eine ganze Zahl zwischen 0 und 4 ist,
- X ein Halogenatom ist, und
- m eine ganze Zahl zwischen 0 und 2 ist,
(C) Gruppen der Formel :
O-SO₂-CT₃ (IV)
in der T unter dem Wasserstoff- und den Halogenatomen ausgewählt wird, und
(D) Gruppen der Formel :
B(R₂)₄ (V)
in der R₂ unter dem Wasserstoffatom und den Alkyl- und Arylresten ausgewählt wird.

3. Initiatorsystem nach einer der Ansprüche 1 und 2, dadurch gekennzeichnet, daß das molare Verhältnis des organischen Alkalimetallderivates bezogen auf den Initiator mindestens 0,3 und höchstens 15 beträgt.

4. Initiatorsystem nach einer der Ansprüche 1 bis 3, dadurch gekennzeichnet, daß die Gruppe, an die das Alkalimetall gebunden ist, unter der Acetat-, Propionat-, Benzoat-, α-Bromacetat-, Trifluoracetat-, Methansulfonat-, Trifluormethansulfonat-, Borhydrid- und Tetraphenylboridgruppe ausgewählt wird.

5. Verfahren nach einer der Ansprüche 1 bis 4, dadurch gekennzeichnet, daß die Polymerisation bei einer Temperatur zwischen -80°C und 0°C durchgeführt wird.

6. Verfahren nach einer der Ansprüche 1 bis 5, dadurch gekennzeichnet, daß die Polymerisation in Gegenwart mindestens eines Lösemittels durchgeführt wird.

7. Verfahren nach Anspruch 6, dadurch gekennzeichnet, daß das Lösemittel Tetrahydrofuran ist.

8. Verfahren nach Anspruch 6, dadurch gekennzeichnet, daß das Lösemittel Toluol ist.

9. Verfahren nach einer der Ansprüche 1 bis 8, dadurch gekennzeichnet, daß das (Meth)acrylat unter dem Methylmethacrylat und den Tertiäralkylacrylaten ausgewählt wird.

## Claims (Claims for the following Contracting State(s): AT, BE, CH, DE, DK, FR, GB, GR, IT, LI, LU, NL, SE)

1. Initiating system for the anionic polymerisation of (meth)acrylates comprising at least one initiator of formula R-M (I) in which M denotes a metal chosen from alkali metals and alkaline-earth metals and R denotes a straight- or branched-chain alkyl radical containing from 2 to 6 carbon atoms or an aryl radical or an arylalkyl radical, characterised in that it additionally comprises at least one organic derivative of an alkali metal, provided that this organic derivative is neither an alkoxide nor a carboxylic acid ester substituted in the α-position by the said metal.

2. Initiating system according to Claim 1, characterised in that the organic derivative is a compound in which the alkali metal is combined with a group chosen from:
(A) groups of formula: 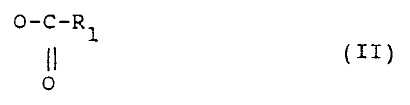 in which R₁ is a linear or branched alkyl radical having from 1 to 20 carbon atoms, or else a cycloalkyl radical having from 3 to 20 carbon atoms, or else an aryl radical having from 6 to 14 carbon atoms,
(B) groups of formula: 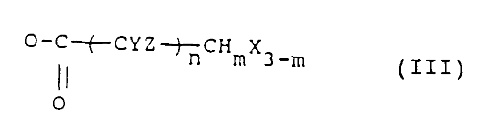 in which:
- Y and Z, which are identical to or different from each other, are chosen from the hydrogen atom and halogen atoms;
- n is an integer ranging from 0 to 4,
- X is a halogen atom, and
- m is an integer ranging from 0 to 2,
(C) groups of formula:
O-SO₂-CT₃ (IV)
in which T is chosen from the hydrogen atom and halogen atoms, and
(D) groups of formula:
B(R₂)₄ (V)
in which R₂ is chosen from the hydrogen atom and alkyl and aryl radicals.

3. Initiating system according to either of Claims 1 and 2, characterised in that the molar proportion of alkali metal organic derivative with respect to the initiator is not less than 0.3 and not greater than 15.

4. Initiating system according to one of Claims 1 to 3, characterised in that the group with which the alkali metal is combined is chosen from acetate, propionate, benzoate, α-bromoacetate, trifluoroacetate, methane-sulphonic, trifluoromethanesulphonic, borohydride and tetraphenylboride groups.

5. Process for the polymerisation of (meth)acrylates and optionally of vinyl comonomers using at least one initiator of formula R-M (I) in which M denotes a metal chosen from alkali metals and alkaline-earth metals and R denotes a straight- or branched-chain alkyl radical containing 2 to 6 carbon atoms or an aryl radical or an arylalkyl radical, characterised in that polymerisation is carried out in the presence of an initiating system in accordance with one of Claims 1 to 4.

6. Process according to Claim 5, characterised in that polymerisation is carried out at a temperature between -80°C and 0°C.

7. Process according to either of Claims 5 and 6, characterised in that polymerisation is carried out in the presence of at least one solvent.

8. Process according to Claim 7, characterised in that the solvent is tetrahydrofuran.

9. Process according to Claim 7, characterised in that the solvent is toluene.

10. Process according to one of Claims 5 to 9, characterised in that the (meth)acrylate is chosen from methyl methacrylate and tertiary alkyl acrylates.

## Claims (Claims for the following Contracting State(s): ES)

1. Process for the anionic polymerisation of (meth)acrylates and optionally of vinyl comonomers using at least one initiator of formula R-M (I) in which M denotes a metal chosen from alkali metals and alkaline-earth metals and R denotes a straight- or branched-chain alkyl radical containing from 2 to 6 carbon atoms or an aryl radical or an arylalkyl radical, characterised in that polymerisation is carried out in the presence of an initiating system comprising, in addition to the said initiator(s), at least one organic derivative of an alkali metal, provided that this organic derivative is neither an alkoxide nor a carboxylic acid ester substituted in the α-position by the said metal.

2. Process according to Claim 1, characterised in that the organic derivative is a compound in which the alkali metal is combined with a group chosen from:
(A) groups of formula: 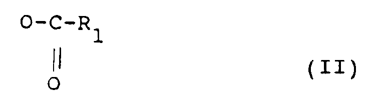 in which R₁ is a linear or branched alkyl radical having from 1 to 20 carbon atoms, or else a cycloalkyl radical having from 3 to 20 carbon atoms, or else an aryl radical having from 6 to 14 carbon atoms,
(B) groups of formula: 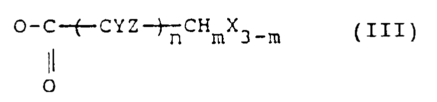 in which:
- Y and Z, which are identical to or different from each other, are chosen from the hydrogen atom and halogen atoms;
- n is an integer ranging from 0 to 4,
- X is a halogen atom, and
- m is an integer ranging from 0 to 2,
(C) groups of formula:
O-SO₂-CT₃ (IV)
in which T is chosen from the hydrogen atom and halogen atoms, and
(D) groups of formula:
B(R₂)₄ (V)
in which R₂ is chosen from the hydrogen atom and alkyl and aryl radicals.

3. Process according to either of Claims 1 and 2, characterised in that the molar proportion of alkali metal organic derivative with respect to the initiator is not less than 0.3 and not greater than 15.

4. Process according to one of Claims 1 to 3, characterised in that the group with which the alkali metal is combined is chosen from acetate, propionate, benzoate, α-bromoacetate, trifluoroacetate, methanesulphonic, trifluoromethanesulphonic, borohydride and tetraphenylboride groups.

5. Process according to one of Claims 1 to 4, characterised in that polymerisation is carried out at a temperature between -80°C and 0°C.

6. Process according to one of Claims 1 to 5, characterised in that polymerisation is carried out in the presence of at least one solvent.

7. Process according to Claim 6, characterised in that the solvent is tetrahydrofuran.

8. Process according to Claim 6, characterised in that the solvent is toluene.

9. Process according to one of Claims 1 to 8, characterised in that the (meth)acrylate is chosen from methyl methacrylate and tertiary alkyl acrylates.
